# EUROPÄISCHE PATENTSCHRIFT

(11) **EP 0 408 875 B1**
(45) Veröffentlichungstag und Bekanntmachung des Hinweises auf die Patenterteilung: **05.01.1994**
(21) Anmeldenummer: 90110334.1
(22) Anmeldetag: 31.05.1990
(51) Int. Cl.: D21D 5/06, D21B 1/32

(54) **Siebtrommel zum Sortieren einer wässrigen Suspension**
Straining cylinder for screening a watery suspension
Cylindre de tamisage pour l'épuration d'une suspension aqueuse

(30) Priorität: 18.07.1989 DE 3923735
(43) Veröffentlichungstag der Anmeldung: 23.01.1991
(73) Patentinhaber: SULZER-ESCHER WYSS GMBH, D-88183 Ravensburg (DE)
(72) Erfinder: Siewert, Wolfgang, Dr., D-7980 Ravensburg-Weingartshof (DE)

(56) Entgegenhaltungen:
- EP-A- 0 164 428
- DE-C- 3 221 788
- GB-A- 2 050 187
- GB-A- 2 099 323
- US-A- 1 897 156

## Beschreibung

Die Erfindung betrifft eine Siebtrommel zum Sortieren einer wässrigen Suspension der in dem Oberbegriff des Patentanspruchs 1 angegebenen Art.

Solche Siebtrommeln werden von der Papierindustrie bei der Stoffaufbereitung benutzt, um z.B. in einem ersten Trennungsschritt aus einer Suspension des im Wasser gelösten Altpapiermaterials gröbere, weiter zur Papier- bzw. Kartonherstellung nicht verwendbare Materialkomponenten, wie z.B. unlösbare Kunststoffteile und andere ähnliche Agglomerate oder Teile als Reject abzutrennen und Stoffasern als Produkt zu gewinnen.

Eine derartige Siebtrommel ist aus der US PS 1,897,156 bekannt. Die dort vorgeschlagegenen Wehrwände teilen das Trommelvolumen an meheren Stellen bis zum Umfang auf, und der Stoffstrom wird durch schöpfende Einbauten bewirkt. Dadurch ist die Trommel aufwendig, ohne daß ein großer Durchsatz möglich wäre.

Andere bisher verwendete zylindrische Siebtrommeln können nur bis ca. einem Drittel ihres Durchmessers gefüllt werden, so daß ihre Filter- bzw. Sortierfläche im Betrieb nur im Umfang von 20 bis 30 % benutzt wird. Eine höhere Füllung führte dazu, daß ein wesentlicher Teil der Suspension mit dem Produkt aufgrund des sich ergebenden Gefälles zwischen dem Einlaufbereich und der Austragsöffnung nicht durch die Lochung der Siebtrommel, durch ihre Durchlaufseite also, sondern durch die Austragsöffnung unsortiert herausfließen würden. Das bedeutete einen Produktverlust.

Es ist bekannt, durch Einbau einer schraubenförmigen, entlang des Siebmantels verlaufenden Stauwand zwar einen gewissen Rückstau der eingefüllten Suspension zu erreichen, was jedoch keine wesentliche Erhöhung des einfüllbaren Niveaustandes der Suspension in der Siebtrommel ermöglicht. Die schraubenförmige Stauwand, die gleichzeitig dem Transport der Suspension durch die Siebtrommel dient, ist notwendigerweise relativ niedrig zu halten, denn es ist auch ein Raum innerhalb der Siebtrommel für einen Einbau von Verdünnungsrohren zum Auswaschen der Fasern in der Sortierzone sowie für den Zugang in das Innere der Siebtrommel freizuhalten.

Der Erfindung lag die Aufgabe zugrunde, die Durchsatzleistung einer Siebtrommel beim Sortieren zu erhöhen und die bisherigen Produktverluste dabei zu minimieren. Dabei soll auch eine Begrenzung oder Vereinfachung der notwendigen Lochung der Siebtrommel ermöglicht werden, um die Siebtrommel billiger herstellen zu können. Die Auswaschung der Fasern und das Entmischen des eingefüllten Materials soll gut sein. Es soll möglich sein, auf die bisher notwendigen Maßnahmen der Umkehr der Siebtrommel-Drehrichtung zu verzichten.

Diese Aufgabe ist durch Maßnahmen, die in dem kennzeichnenden Teil des Patentanspruchs 1 angegeben sind, erfüllt.

In den Unteransprüchen sind vorteilhatte Ausführungsbeispiele der Erfindung angegeben.

Im weiteren werden der Erfindungsgegenstand und seine Vorteile näher beschrieben und erklärt. Die Beschreibung bezieht sich auf eine Zeichnung, in welcher - jeweils in schematischer Darstellung - zeigen:
- Figur 1: ein erstes Ausführungsbeispiel im Längsschnitt, und
- Figur 2: einen Querschnitt zu Figur 1,
- Figur 3: ein zweites Ausführungsbeispiel im Längsschnitt, und
- Figur 4: einen Querschnitt zu Figur 3,
- Figur 5: ein weiteres Ausführungsbeispiel im Querschnitt,
- Figur 6: eine Ausführungsform der wehrwand im Querschnitt,
- Figur 7: eine Position der wehrwände in der Siebtrommel, und
- Figur 8: ihre Position nach einer Drehung der Siebtrommel um 90°,
- Figur 9: eine Position einer Wehrwand in der Siebtrommel, und
- Figur 10: ihre Position nach einer Drehung der Siebtrommel um 180°.

Eine Siebtrommel 1 ist zum Sortieren einer wässrigen Suspension ausgelegt, welche nach Auflösen eines Altpapiermaterials im Wasser entstanden ist. Beim Sortieren geht es um eine Abtrennung der zur Herstellung von Papier oder Karton weiter verwendbaren Fasern, die als Produkt dieses Trennungsschrittes gewonnen werden sollen, von den Materialkomponenten im Altpapier, die aus dem weiter zu verarbeitenden Material als Reject ausgeschieden werden müssen. Es handelt sich z.B. um verschiedene Kunststoffteile, gröbere Schmutzteile oder ungelöste, krümelförmige Agglomerate und ähnliches.

Die drehbar gelagerte und antreibbare Siebtrommel 1 hat einen eine Lochung aufweisenden Siebmantel 2 mit einer Stirnwand 3 an der Einlaufseite, in welcher im zentralen Bereich ein feststehendes Einlaufrohr 4 für die Suspension, ggfs. zur Stirnwand abgedichtet, angeordnet ist. Eine Austragsöffnung 5 ist an dem Ende des Siebmantels 2 vorgesehen. Ihr Durchmesser gleicht dem Durchmesser des Siebmantels 2 an dieser Stelle. Die Siebtrommel 1 ist zum Transport des Materials durch die Siebtrommel im Raum leicht gegen die Horizontale in Richtung zur Austragsöffnung 5 geneigt. Es ist auch vorstellbar, daß bei horizontaler Lage der Siebtrommel die Fließbewegung des Materials bereits ausreicht.

Im Betrieb wird die Siebtrommel um ihre Achse gedreht, wobei die zu gewinnenden Fasern 21 als Produkt zusammen mit dem wässrigen Anteil der Suspension durch die Lochung des Siebmantels 2 durch ihr Eigengewicht herausfließen und der Rückstand als Reject 22 durch die Austragsöffnung 5 am Ende der Trommel herausfällt.

Im Bereich des Siebmantels 2 sind in der Siebtrommel 1 quer zu ihrer Rotationsachse stehende Wehrwände 6 eingebaut. Sie stehen in Abständen zueinander, eine erste in einem Abstand zu der Stirnwand 3. So begrenzen die Wehrwände 6 Kammern 7,8,9,10 und 11 und einen restlichen Raum 12 in der Siebtrommel zwischen der letzten Wehrwand 6 und der Austragsöffnung 5. Die Wehrwände 6 decken jeweils einen größeren Teil des Querschnitts der Siebtrommel 1 ab, indem zwischen ihren Wehrkanten 61 und dem Siebmantel 2 exzentrische Durchflußöffnungen 62 freigelassen sind, durch welche die Suspension aus einer Kammer in die ihr folgende Kammer herausfließen kann.

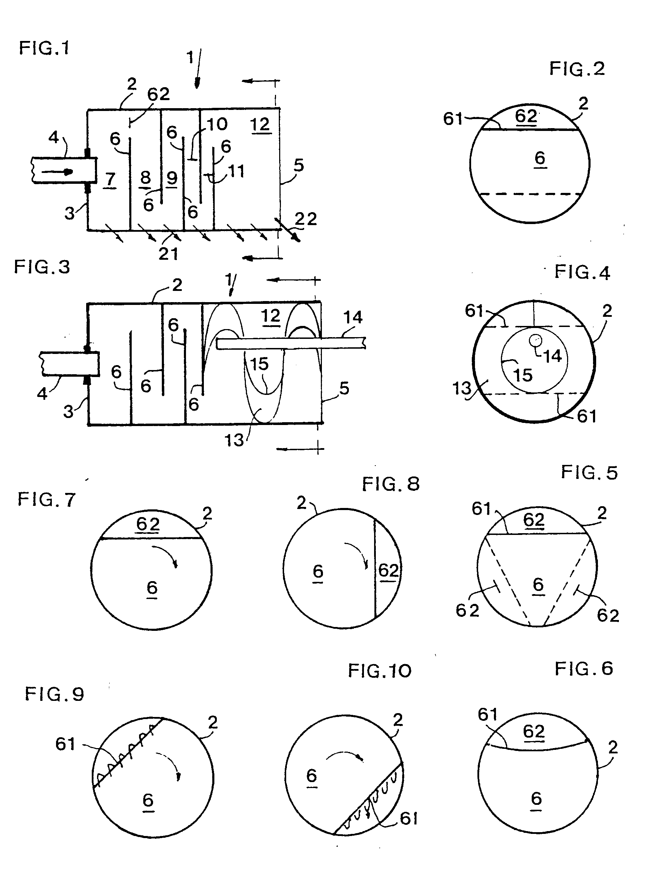

Die Wehrwände 6 sind hintereinander so angeordnet, daß die Durchflußöffnung 62 der nächstfolgenden Wehrwand gegenüber der Durchflußöffnung an der vorherigen Wehrwand um 120 bis 180° drehversetzt ist. Eine solche Versetzung der Durchflußöffnungen 62 um 180^{°} ist beispielsweise in den Figuren 1 bis 4 sowie in Figuren 7 und 8 dargestellt, und eine Versetzung der Durchflußöffnungen 62 jeweils um 120^{°} in der Drehrichtung ist in Figur 5 zu sehen. Die aus dieser Ansicht nicht sichtbaren Wehrkanten der hintereinanderstehenden Wehrwände sind in der Zeichnung gestrichelt angedeutet.

Die erste Kammer 7 ist beim Stillstand der Siebtrommel 1 bis hinauf zu der Wehrkante 61 der ersten Wehrwand 6 mit der Suspension auffüllbar, wenn die Wehrwand in der Position mit der Wehrkante horizontal oben steht. Ein auffüllbares Volumen der ersten Kammer 7 sollte so groß sein, daß sie ein ganzes Produktionsvolumen, z.B. eines Produktionstaktes eines vorgeschalteten Fiberizers aufnehmen kann. Gleichzeitig mit dem Füllen erfolgt schon das Abfließen des Produktes, der Fasern mit dem wässrigen Anteil der Suspension durch die Lochung in dem Siebmantel 2, wobei nun ca. 80 % des Umfangs der Siebfläche für die Trennung Produkt/Reject ausgenutzt werden. Dabei ist die Wassersäule in der Kammer entsprechend der Höhe der Wehrkante 61 hoch, so daß das Produkt unter höherem hydraulischen Druck durch die Lochung durchfließt. Beide genannten Faktoren ermöglichen eine wesentliche Erhöhung der Durchsatzleistung der erfindungsgemäßen Siebtrommel gegenüber den bisherigen Apparaten. Die Trennung erfolgt nun an einer größeren Trennfläche und unter einem höheren hydraulischen Druck. Sinnvollerweise erfolgt dies auch in den folgenden Kammern 8, 9 usw., wie gleich beschrieben wird.

Bei nachfolgendem Drehen der Siebtrommel 1 kommt die Durchflußöffnung 62 immer mehr in die Position, in welcher die Suspension aus der gefüllten Kammer 7 in die folgende Kammer 8, bzw. bei ständiger Abnahme des Volumens der Suspension wegen des fortlaufenden Abflusses des Materials durch die Lochung im Siebmantel 2 fließt. Um das Niveau der Suspension in den Kammern 8 und 9 und auch in den weiteren möglichst hoch zu halten, also eine möglichst große Trennfläche bei höherem hydraulischem Druck zu erreichen, ist es von Vorteil, daß der Abstand von einer Wehrwand 6 zu der nachfolgenden in Richtung zu der Austragsöffnung 5 hin jeweils kleiner gewählt wird, so daß ein auffüllbares Volumen der jeweils nachfolgenden Kammer 8 bzw. 9 bzw. 10 bzw. 11 entsprechend der erfolgten Volumenabnahme der Suspension kleiner ist als das Volumen der vorherigen Kammer. Die wechselnde Änderung der Position der Durchflußöffnungen 62 beim Drehen der Siebtrommel 1 ist in den Figuren 7 und 8 eigens dargestellt: In Figur 7 zeigt eine Staustellung der Wehrwand 6 bzw. der Durchflußöffnung 62, wogegen in Figur 8 eine Abflußstellung der Durchflußöffnung 62 dargestellt ist. In den Figuren ist jeweils die Wehrkante 61 einer vorherigen Wehrwand 6 gestrichelt angedeutet.

Bei dem Ausführungsbeispiel gemäß Fig. 3 und 4 sind die Wehrwände 6 in einer ersten, der Stirnwand 3 angrenzenden Zone der Siebtrommel 1 vorgesehen.

In dem übrigen Raum 12 des Bereichs des Siebmantels 2 ist eine Wendelgangwand 13 angeordnet. Sie folgt einer gedachten Schraubenlinie am Siebmantel 2. Ihre in das Innere der Siebtrommel 1 weisende Kante 15 liegt zwischen der Siebtrommelachse und dem Siebmantel 2, so daß im Bereich der Wendelgangwand 13 mittig in der Siebtrommel 1 ein Raum freigelassen ist. In diesem Raum ist eine Verdünnungs- bzw. Waschvorrichtung mit einem Spritzrohr 14 angeordnet. Damit können die hier noch vorhandenen Fasern ausgewaschen und zum Produkt gewonnen werden. Die Wendelgangwand 13 staut nicht nur den Fluß der Suspension auf, sondern transportiert auch den nicht fließfähigen Reject zu der Austragsöffnung 5 hin. Eine Schrägstellung der Siebtrommel 1 im Raum ist bei dieser Ausführungsform gemäß Fig. 3 bzw. 4 nicht unbedingt notwendig.

Das durchströmte Profil der Durchflußöffnung 62 kann durch Gestaltung der Wehrkante 61 und/oder durch Anbringen von Blenden strömungstechnisch vorteilhaft ausgelegt werden, um einen Suspensionsschwall bei dem Fluß von Kammer zu Kammer zu verhindern und einen gewünschten, möglichst gleichmäßigen Durchfluß zu erreichen. Zu dem Zwecke kann auch die Wehrkante 61, frontal gesehen, gekrümmt sein, z.B. entlang einer Kurvenlinie verlaufen. Wie in Figur 6 gezeigt, kann sie z.B. die Form eines Kreissegments haben.

An den Wehrkanten 61 werden sich, wenn diese sich beim Drehen der Siebtrommel aufwärts durch die Suspension bewegen, manche spinnende Teile der Suspension ansetzen. Diese fallen jedoch gleich von den Wehrkanten ab, wenn sich diese in der Folge bei dem Drehen der Siebtrommel wieder abwärts bewegen. In diesem Sinne werden die Wehrkanten 61 selbsttätig gereinigt. Zur Unterstützung dieses Effekts sollen die Wehrkanten im Profil gesehen abgerundet sein. In Figur 9 ist das Ansetzen, in Figur 10 das Abfallen der spinnenden Teile bezüglich der Wehrkante 61 dargestellt.

In den Kammern 7 bis 11 sollten bekannte Wirbelelemente zum ständigen Durchmischen der Suspension eingebaut werden, was auch eine bessere Auswaschung der in den Kammern zurückgehaltenen Suspension erzwingt, die Trennfläche reinigt und das Entmischen der Komponenten der Suspension bessert.

Die offene Trennfläche kann, verglichen mit den bisherigen Apparaten, kleiner oder mit kleinerer Lochung versehen sein, da die Kammern 7 bis 11 wirklich abgeschottete Räume sind, in welchen die Suspension bei hohem Niveau gestaut wird.

Auf eine Antriebsvorrichtung zum Umkehren der Siebtrommel-Drehrichtung kann verzichtet werden.

Die Erfindung ist auch bei konischen Siebtrommeln anwendbar. Jedoch ist die zylindrische Konstruktion einfacher auszulegen, da dabei kein Querschnittsproblem an der Einlaufseite und an der Austragseite vorliegt.

Da beim Erfindungsgegenstand eine längere Entwässerungszeit zur Verfügung steht, kann an der Lochfläche, an der Zahl der Bohrungen pro Fläche oder an ihrer Größe gespart werden. Das Bohren oder Stanzen der Löcher ist das teuerste bei der Herstellung der Siebtrommeln. Eine Verkleinerung der Lochgröße kann außerdem die Qualität verbessern.

Ein Vorteil ist auch darin, daß die nächste Charge bereits bei noch nicht vollkommener Entwässerung der vorhergehenden Charge eingegeben werden kann. Dadurch gestaltet sich der Betrieb quasi kontinuierlich, wodurch auch erhebliche Kosten gespart werden.

Die Erfindung ist nicht nur auf die beschriebenen Ausführungsbeispiele begrenzt. Sie ist auch bei den Siebtrommeln anwendbar, die zum Trennen anderer Suspensionen als der hier erwähnten konzipiert sind.

## Patentansprüche

1. Siebtrommel (1) zum Sortieren einer wässrigen Suspension mit einem rotationskörperförmigen Siebmantel (2), mit einer Stirnwand (3), in welcher mittig ein Einlaufrohr (4) für die Suspension vorgesehen ist, und mit einer Austragsöffnung (5) am Ende des Siebmantels (2), welche Siebtrommel (1), waagrecht oder leicht geneigt zur Horizontalen im Raum angeordnet, im Betrieb rotierbar ist, wobei ein Produkt (21) mindestens mit einem wesentlichen Teil des Suspensionswassers durch die Lochung im Siebmantel (2) wegfließt und ein Reject (22) die Siebtrommel (1) durch die Austragsöffnung (5) verläßt, wobei in dem Bereich des Siebmantels (2) in der Siebtrommel (1) quer zur Rotationsachse des Siebmantels (2) stehende Wehrwände (6) in Abständen zueinander, Kammern (7, 8, 9, 10, 11) begrenzend, eingebaut sind, die jeweils einen Teil des Querschnitts der Siebtrommel abdecken und Durchflußöffnungen aufweisen, welche Durchflußöffnungen (62) bei jeder in Richtung zur Austragsöffnung (5) hin folgenden Wehrwand (6) gegenüber der vorherigen in Umfangsrichtung versetzt sind, und wobei die Achse der Siebtrommel (1) horizontal liegt, dadurch gekennzeichnet, daß die Durchflußöffnungen (62) zwischen den Wehrkanten (61) der Wehrwände (6) und dem Siebmantel (2) exzentrisch frei gelassen sind, und daß die Achse der Siebtrommel (1) horizontal liegt oder zu der Horizontalen in Richtung zu der Austragsöffnung (5) hin unter einem Winkel bis 10° geneigt ist.

2. Siebtrommel nach Anspruch 1, dadurch gekennzeichnet, daß der Winkel des Versatzes der Durchflußöffnungen (62) gegenüber der vorherigen 120° - 180° beträgt.

3. Siebtrommel nach Anspruch 1, dadurch gekennzeichnet, daß der Abstand von einer Wehrwand (6) zur nächsten in Richtung zu der Austragsöffnung (5) hin jeweils kleiner ist, so daß ein Volumen der jeweils nachfolgenden Kammer (8, 9, 10, 11) kleiner ist als das der vorherigen.

4. Siebtrommel nach Anspruch 1, dadurch gekennzeichnet, daß die Wehrwände (6) nur in einer ersten, der Stirnwand (3) angrenzenden Zone der Siebtrommel (1) vorgesehen sind und in dem übrigen Raum (12) des Bereichs des Siebmantels (2) eine einer gedachten Schraubenlinie am Siebmantel (2) folgende Wendelgangwand (13) angeordnet ist, deren innere Kante (15) zwischen der Siebtrommelachse und dem Siebmantel (2) liegt.

5. Siebtrommel nach Anspruch 4, dadurch gekennzeichnet, daß in dem Raum, der zwischen der Siebtrommelachse und der inneren Kante (15) der Wendelgangwand (13) frei gelassen ist, eine Waschvorrichtung mit einem Spritzrohr (14) angeordnet ist.

6. Siebtrommel nach Anspruch 1, dadurch gekennzeichnet, daß die Wehrkanten (61) der Wehrwände (6) im Profil abgerundet sind.

7. Siebtrommel nach Anspruch 1, dadurch gekennzeichnet, daß die Wehrkanten (61) der Wehrwände (6), in Ansicht gesehen, entlang einer Kurve verlaufen.

## Claims

1. A sieve drum (1) for screening an aqueous suspension, with a sieve casing (2) in the form of a body of revolution, with an end wall (3) in which an inlet pipe (4) for the suspension is provided centrally, and with a discharge opening (5) at the end of the sieve casing (2), which sieve drum (1), arranged horizontally or at a slight inclination to the horizontal in the space, can rotate in operation, with a product (21) flowing away at least with a considerable portion of the suspension water through the perforations in the sieve casing (2) and a reject (22) leaving the sieve drum (1) through the discharge opening (5), wherein weir walls (6) which are transverse to the axis of rotation of the sieve casing (2) are built in at intervals from each other, defining chambers (7, 8, 9, 10, 11), in the region of the sieve casing (2) in the sieve drum (1), which walls each cover a part of the cross-section of the sieve drum and have throughflow openings, which throughflow openings (62) in each subsequent weir wall (6) in the direction of the discharge opening (5) are offset in the peripheral direction relative to the preceding one, and the axis of the sieve drum (1) being horizontal, characterised in that the throughflow openings (62) are left free eccentrically between the weir edges (61) of the weir walls (6) and the sieve casing (2), and that the axis of the sieve drum (1) lies horizontally or is inclined at an angle of up to 10° to the horizontal towards the discharge opening (5).

2. A sieve drum according to Claim 1, characterised in that the angle of the offset of the throughflow openings (62) relative to the previous ones is 120° - 180°.

3. A sieve drum according to Claim 1, characterised in that the distance from one weir wall (6) to the next in the direction of the discharge opening (5) is smaller each time, so that a volume of the subsequent chamber (8, 9, 10, 11) each time is smaller than that of the previous one.

4. A sieve drum according to Claim 1, characterised in that the weir walls (6) are provided only in a first zone of the sieve drum (1) which adjoins the end wall (3) and a helical wall (13) which follows an imaginary helix on the sieve casing (2) is located in the remaining space (12) of the region of the sieve casing (2), the inner edge (15) of which wall lies between the axis of the sieve drum and the sieve casing (2).

5. A sieve drum according to Claim 4, characterised in that a washing device with a spraying pipe (14) is located in the space which is left free between the sieve drum axis and the inner edge (15) of the helical wall (13).

6. A sieve drum according to Claim 1, characterised in that the weir edges (61) of the weir walls (6) are rounded off in profile.

7. A sieve drum according to Claim 1, characterised in that the weir edges (61) of the weir walls (6), when viewed from the front, run along a curve.

## Revendications

1. Tambour filtrant (1) pour trier une suspension aqueuse avec une enveloppe filtrante (2) ayant la forme d'un corps de rotation, avec une paroi frontale (3) au milieu de laquelle est prévu un tuyau d'alimentation (4) pour la suspension, et avec une ouverture d'évacuation (5) à l'extrémité de l'enveloppe filtrante (2), ce tambour filtrant (1) disposé horizontalement ou légèrement incliné dans l'espace par rapport à l'horizontale, étant rotatif au cours du travail, tandis qu'un produit (21) s'écoule au dehors avec au moins une partie importante de l'eau de suspension à travers les perforations de l'enveloppe filtrante (2) et qu'un rejet (22) sort du tambour filtrant (1) par l'ouverture d'évacuation (5), des cloisons de barrage (6) étant montées dans le tambour filtrant (1) dans la zone de l'enveloppe filtrante (2) transversalement à l'axe de rotation de l'enveloppe filtrante (2), en étant espacées entre elles en délimitant des chambres (7, 8, 9, 10, 11), ces cloisons couvrant chacune une partie de la section transversale du tambour filtrant et présentant des ouvertures de passage, lesquelles ouvertures de passage (62) sont décalées en sens périphérique sur chaque cloison de barrage (6) successive en direction de l'ouverture d'évacuation (5) par rapport à la cloison précédente, l'axe du tambour filtrant étant horizontal,
**caractérisé** en ce que les ouvertures de passage (62) sont dégagées excentriquement entre les bords (61) de barrage des cloisons de barrage (6) et l'enveloppe filtrante (2), et en ce que l'axe du tambour filtrant (1) est horizontal ou est incliné d'un angle jusqu'à 10° par rapport à l'horizontale en direction de l'ouverture d'évacuation (5).

2. Tambour filtrant selon la revendication 1, caractérisé en ce que l'angle de décalage des ouvertures de passage (62) par rapport à la précédente est de 120° à 180°.

3. Tambour filtrant selon la revendication 1, caractérisé en ce que l'espacement entre une cloison de barrage (6) et la suivante en direction de l'ouverture d'évacuation (5) est chaque fois plus petit, de telle sorte que le volume de chaque chambre suivante (8, 9, 10, 11) est plus petit que celui de la précédente.

4. Tambour filtrant selon la revendication 1, caractérisé en ce que les cloisons de barrage (6) sont prévues seulement dans une première zone du tambour filtrant (1) adjacente à la paroi frontale (3) et, dans l'espace restant (12) de la zone de l'enveloppe filtrante (2),une paroi hélicoïdale (13) est disposée selon une ligne hélicoïdale imaginaire sur l'enveloppe filtrante (2), son bord intérieur (15) se situant entre l'axe du tambour filtrant et l'enveloppe filtrante (2).

5. Tambour filtrant selon la revendication 4, caractérisé en ce qu'un dispositif de lavage avec un tuyau pulvérisateur (14) est disposé dans l'espace laissé libre entre l'axe du tambour filtrant et le bord intérieur (15) de la paroi hélicoïdale (13).

6. Tambour filtrant selon la revendication 1, caractérisé en ce que les bords de barrage (61) des cloisons de barrage (6) ont un profil arrondi.

7. Tambour filtrant selon la revendication 1, caractérisé en ce que les bords de barrage (61) des cloisons de barrage s'étendent le long d'une courbe en étant vus de face.
